# EUROPÄISCHE PATENTSCHRIFT

(11) **EP 3 015 635 B1**
(45) Veröffentlichungstag und Bekanntmachung des Hinweises auf die Patenterteilung: **14.02.2018**
(21) Anmeldenummer: 15191227.6
(22) Anmeldetag: 23.10.2015
(51) Int. Cl.: E06B 3/263

(54) **VERBUNDPROFIL FÜR TÜREN, FENSTER ODER FASSADENELEMENTE**
COMPOSITE PROFILE FOR DOORS, WINDOW OR FAÇADE ELEMENTS
PROFILE COMPOSITE POUR DES PORTES, FENETRES OU ELEMENTS DE FAÇADE

(30) Priorität: 29.10.2014 DE 102014115714
(43) Veröffentlichungstag der Anmeldung: 04.05.2016
(73) Patentinhaber: SCHÜCO International KG, 33609 Bielefeld (DE)
(72) Erfinder: FISCHER, Max, 59063 Hamm (DE); LEISTNER, Andreas, 33378 Rheda-Wiedenbrück (DE)
(74) Vertreter: Specht, Peter

(56) Entgegenhaltungen:
- EP-A2- 2 045 430
- DE-A1- 4 435 281

## Beschreibung

Die vorliegende Erfindung betrifft ein Verbundprofil für Türen, Fenster oder Fassadenelemente nach dem Oberbegriff des Anspruchs 1.

Verbundprofile der oben genannten Art sind bekannt und werden seit langem erfolgreich eingesetzt. Ein wichtiges konstruktives Merkmal derartiger Verbundprofile besteht in der Schubfestigkeit des Verbundes, d.h., dass sich die Teilprofile, die gemeinsam mit einem Isoliersteg ein Rahmenprofil bilden, in Profilrichtung bzw. Längsrichtung nicht relativ zueinander verschieben lassen.

In der DE 29 37 454 C2 ist ein Verbundprofil beschrieben, das eine formschlüssige Verbindung zwischen den metallischen Teilprofilen bzw. Schalen und dem Isoliersteg aufweist. Dies ist durch eine metallische, einen Formschluss bildende Einlage erreicht, so dass sich ein Verschieben in Längsrichtung verhindern lässt. Eine derartige Verbindung wird als schubfest bezeichnet.

Einen gattungsgemäßen Stand der Technik offenbart die DE 44 35 281 A1 Zum Stand der Technik wird ferner die EP 2 045 430 A2 genannt.

In der Praxis hat sich jedoch gezeigt, dass sich durch unterschiedliche, witterungsbedingte thermische Ausdehnung der Innen- und Außenschalen eines Rahmenprofils ein Bimetall-Effekt einstellt. D.h., dass sich die einzelnen Teilprofile bzw. Schalen in der Flächenebene des Rahmenprofils verziehen und es somit zu Undichtigkeiten kommen kann. Dies ist insbesondere bei Türen der Fall, die der Sonneneinstrahlung ausgesetzt sind.

Um das Problem der Verformung auf Grund witterungsbedingter thermischer Einflüsse zu beheben, wurde in der EP 0 829 609 A2 ein sogenannter schubloser Verbund vorgeschlagen. Hiernach ist die Verbindung zwischen Isoliersteg und metallischem Teilprofil bzw. Schale so ausgestaltet, dass ein Verschieben in Längsrichtung möglich ist. Diese Verschiebbarkeit in Längsrichtung kann sowohl zwischen dem Isoliersteg und dem metallischen Teilprofil bzw. Schale stattfinden, wie auch zwischen zwei Teilen eines aus diesen Teilen zusammenzusetzenden Isolierstegs (der vorzugsweise aus Kunststoff besteht).

Allerdings können auch im Rahmen der Fertigung von Verbundprofilen, z.B. beim Einbrennlackieren thermisch bedingte Verformungen des Verbundprofils auftreten, die im Wesentlichen auf unterschiedlich große Längenausdehnungskoeffizienten der für die Metallprofile und die üblicherweise aus einem Kunststoffwerkstoff hergestellten Isolierstege verwendeten Werkstoffe beruhen.

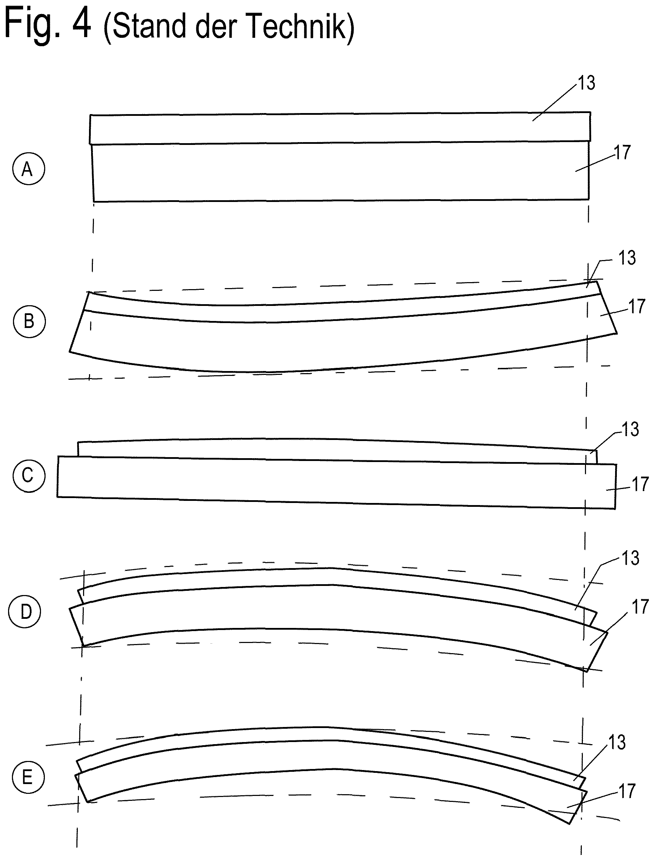

Das Ausprägen dieser Art von Verformung bei Verbundprofilen nach dem Stand der Technik ist in Fig. 4 dargestellt. Dies wird im Folgenden erläutert.

Zunächst werden nach Fig. 4A hier ein metallisches Teilprofil und ein Kunststoffbauteil, wie z.B. ein Isolierstegabschnitt oder ein Isoliersteg zusammenmontiert. Durch das Zusammenschieben des metallischen Teilprofils und des Kunststoffbauteils, wie z.B. ein Isolierstegabschnitt oder ein Isoliersteg durch entsprechende geometrisch korrespondierende Ausprägungen an beiden Bauteilen sowie die Endmontage durch einen Umformprozess entsteht zwischen dem metallischen Teilprofil und dem Kunststoffbauteil, wie z.B, ein Isolierstegabschnitt oder ein Isoliersteg eine form- und kraftschlüssige Verbindung. Das so entstandene Verbundprofil ist eben und weist keine Verformung auf.

Durch thermische Fertigungseinflüsse oder das Erwärmen durch extreme klimatische Verhältnisse insbesondere des Kunststoffbauteils kommt es auf Grund der form- und kraftschlüssigen Verbindung des metallischen Teilprofils mit dem Kunststoffbauteil, wie z.B. ein Isolierstegabschnitt oder ein Isoliersteg zu einer Verspannung des Verbundprofils. In Fig. 4B ist dargestellt, wie sich das Verbundprofil deshalb -hier in Bezug auf die Zeichenebene konvex- verformt.

In Fig. 4C ist der Zustand des Verbundprofils nach Erreichen und Halten einer extremen Temperatur dargestellt. Durch die thermischen Einflüsse wird das Kunststoffbauteil zumindest teilweise plastifiziert bzw. beginnt das Kunststoffbauteil zu kriechen, d.h. es verformt sich unter der Last, die durch die thermisch bedingte Verformung in das Kunststoffbauteil eingebracht wurde. Dadurch werden aufgebaute Spannungen abgebaut und dementsprechend die kraftschlüssige Verbindung zwischen dem metallischen Teilprofil und dem Kunststoffbauteil wieder aufgegeben. Durch den höheren Längenausdehnungskoeffizienten des Kunststoffwerkstoffs erfährt das Kunststoffbauteil eine stärkere Längenänderung als das metallische Teilprofil, so dass das Kunststoffbauteil in einer Relativbewegung an dem metallischen Teilprofil entlang gleitet. Die konvexe Verformung des Verbundprofils wird dementsprechend abgebaut.

In Fig. 4D ist der Zustand des Verbundprofils beim Abkühlen auf Raumtemperatur dargestellt. Durch das Abkühlen geht das Kunststoffbauteil wieder in den festen Zustand über und zieht sich-wie auch das metallische Teilprofil- wieder zusammen. Auf Grund der unterschiedlichen Längenausdehnungskoeffizienten der beiden Bauteile jedoch unterschiedlich stark. Dadurch werden Spannungen im Verbundprofil aufgebaut, so dass sich das Verbundprofil nun insgesamt konkav verformt und dementsprechend die kraftschlüssige Verbindung zwischen dem metallischen Teilprofil und dem Kunststoffbauteil wieder aufgebaut wird.

In Fig. 4E ist der Zustand des Verbundprofils nach einer Auskühlung dargestellt. Das Verbundprofil verbleibt auf Grund der unterschiedlichen Verformung des metallischen Teilprofils und des Kunststoffbauteils in einem unerwünschten Verformungszustand.

Weitere Lösungen von schublosen/schubfesten Verbundprofilen insbesondere zur Vermeidung von witterungsbedingter Dilatation sind bekannt, die allerdings nur unbefriedigend die o.g. Probleme beseitigen und in ihrem konstruktiven Aufbau recht aufwendig und deshalb teuer sind.

Die Erfindung hat demnach die Aufgabe, insbesondere die vorgenannten Probleme im Bereich der Fertigung von Verbundprofilen, aber auch das Problem einer witterungsbedingten Verformung von Verbundprofilen wenigstens teilweise zu beheben.

Die vorliegende Erfindung löst dieses Problem durch den Gegenstand des Anspruchs 1. Die Erfindung schafft zudem ein Verfahren zur Herstellung eines erfindungsgemäßen Verbundprofils nach einem der darauf bezogenen Ansprüche sowie ein Fenster oder eine Tür oder ein Fassadenelement mit wenigstens einem oder mehreren Verbundprofilen nach einem der darauf bezogenen Ansprüche.

Nach dem Kennzeichen des Anspruchs 1 ist vorgesehen, dass der Draht einen glatten Oberflächenabschnitt aufweist, auf dem der jeweilige Steg zur Auflage kommt, um den jeweiligen Endabschnitt des Isolierstegs gleitbeweglich festzulegen, wobei der Steg auf dem glatten Oberflächenabschnitt des Drahtes eine erste Auflagefläche A₁ bildet und eine Restoberfläche des Drahtes auf dem Isoliersteg eine zweite Auflagefläche A₂ bildet und die sich durch Montage der Bauteile bildenden Flächenpressungen p der Auflageflächen A₁ und A₂ im Verhältnis p_{A1} ≥ p_{A2} stehen.

Danach wird vorteilhaft eine Gleitführung am Endabschnitt wenigstens eines Kunststoffbauteils, wie z.B. eines Isolierstegabschnitts oder eines Isolierstegs geschaffen, die sowohl eine Verformung des Verbundprofils durch Fertigungseinflüsse als auch eine Verformung des Verbundprofils durch Witterungseinflüsse weitestgehend vermeidet.

In einer bevorzugten Ausführungsvariante der Erfindung weist ein erfindungsgemäßes Verbundprofil das erste Metallprofil und wenigstens ein zweites Metallprofil auf, wobei das erste Metallprofil mit dem zweiten Metallprofil in wenigstens einer Isolierstegzone über einen oder mehrere der Isoliersteg(e) verbunden ist / sind. Dadurch können in vorteilhafter Weise wärmegedämmte Verbundprofile mit einer Gleitführung zur Vermeidung von fertigungsbedingten und witterungsbedingten Verformungen ausgeführt werden.

In einer weiteren bevorzugten Ausführungsvariante der Erfindung weist der Draht einen glatten Oberflächenabschnitt auf, auf dem der jeweilige Steg zur Auflage kommt, um den jeweiligen Endabschnitt des Isolierstegs festzulegen. Dadurch kann der Reibbeiwert zwischen dem glatten Oberflächenabschnitt des Drahts und dem Steg einfach und damit vorteilhaft eingestellt werden, so dass eine Gleitführung mit definierten Gleiteigenschaften entsteht.

Vorzugsweise ist der glatte Oberflächenabschnitt derart ausgebildet, das er sich vorzugsweise auf der gesamten Länge des Drahtes erstreckt, sich allerdings nur auf einen Teil des Umfangs des Drahtes erstreckt. Der glatte Oberflächenabschnitt bildet in Bezug auf den Durchmesser des Drahtes eine Kreissehne, die vorzugsweise mit einem Mittelpunktwinkel zwischen 10° und 130°, besonders bevorzugt einen Mittelpunktwinkel zwischen 35° und 120° aufweist. Dadurch kann in vorteilhafter Weise der glatte Oberflächenabschnitt durch ein übliches Bearbeitungsverfahren einfach und damit kostengünstig aus einem herkömmlichen Draht mit einer strukturierten Oberfläche bzw. mit einer Außenstruktur wie z.B. einer Rändelung hergestellt werden.

Bevorzugt wird als Bearbeitung eine Schleifbearbeitung gewählt, da ein Schleifbearbeitungsprozess auch im Durchlaufverfahren als Vollschnittschleifen möglich ist und dadurch kostengünstig und damit vorteilhaft der glatte Oberflächenabschnitt herstellbar ist.

Das Verbundprofil wird vorzugsweise durch ein Verfahren hergestellt, bei dem ein Verbinden eines ersten Metallprofils mit wenigsten einem Isolierstegs in wenigstens einer Isolierstegzone erfolgt, wobei der oder die Isoliersteg(e) jeweils wenigstens einen Endabschnitt aufweist bzw. aufweisen, derart, dass wenigstens einer der Endabschnitte jedes Isolierstegs in eine korrespondierende Nut eingreift, die von dem ersten Metallprofile gebildet ist, wobei die Nut aus einem Wulst und einem Steg gebildet ist, wobei ein Auflegen des Steges auf den Umfang eines Drahtes, der in den jeweiligen Isoliersteg eingesetzt ist, wobei der Draht einen glatten Oberflächenabschnitt aufweist, auf dem der jeweilige Steg zur Auflage kommt, um den jeweiligen Endabschnitt des Isolierstegs gleitbeweglich festzulegen, derart, dass der Steg auf dem glatten Oberflächenabschnitt des Drahtes eine erste Auflagefläche A₁ bildet und eine Restoberfläche des Drahtes auf dem Isoliersteg eine zweite Auflagefläche A₂ bildet und derart, dass die sich durch Montage des ersten Metallprofils mit dem Isoliersteg und dem Draht bildenden Flächenpressungen p der Auflageflächen A₁ und A₂ im Verhältnis p_{A1} ≥ p_{A2} stehen.

Das erfinderische Verfahren ist einfach und kostengünstig und damit vorteilhaft in die Fertigung von Verbundprofilen integrierbar.

Weitere vorteilhafte Ausführungen der Erfindung sind den übrigen Unteransprüchen zu entnehmen.

Ausführungsbeispiele des erfindungsgemäßen Gegenstandes sind in den Zeichnungen dargestellt und werden im Folgenden näher beschrieben. Es zeigt:
- Figur 1:: eine Tür, die aus einem Flügel- und einem Blendrahmen aufgebaut ist;
- Figur 2:: eine Schnittdarstellung eines Flügel- bzw. eines Blendrahmenprofils, wobei das Rahmenprofil als ein erfindungsgemäßes Verbundprofil aufgebaut ist;
- Figur 3:: eine Ausschnittsvergrößerung eines Isolierstegabschnitts eines erfindungsgemäßen Verbundprofils in Schnittdarstellung nach Fig. 2;
- Figur 4:: eine schematische Darstellung eines Verbundprofils nach dem Stand der Technik, bei dem abhängig von den jeweiligen Verfahrensschritten das Verformungsverhalten der Verbundprofils nach dem Stand der Technik auf Grund thermischer Fertigungseinflüsse gezeigt ist.

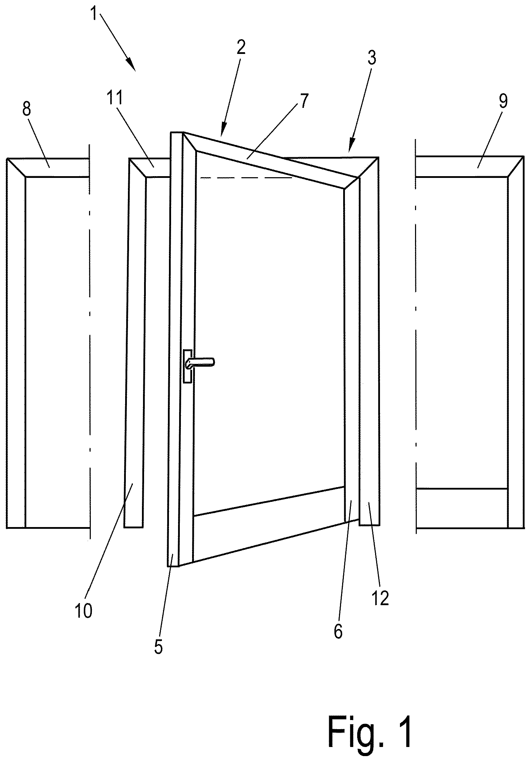

Die Fig. 1 zeigt eine Tür 1, die einen Flügelrahmen 2 und einen Blendrahmen 3 aufweist. Dies ist lediglich rein beispielhaft zu verstehen. Alternativ zu der in Fig. 1 dargestellten Tür 1 kann die vorliegende Erfindung auch bei Fenstern oder anderen Bauelementen zur Anwendung kommen.

Durch eine Eckverbindung der senkrechten Flügelrahmenholme 5, 6 mit einem oberen waagerechten Flügelrahmenholm 7 bildet der Profilverbund einen zumindest U-förmigen Rahmen. Der Rahmen kann aber auch umlaufend geschlossen ausgebildet sein. Der Blendrahmen 3 dieser Tür 1 ist mit Seitenteilen 8, 9 ausgebildet und weist Blendrahmenholme 10, 11, 12 auf. Einzelne oder sämtliche der Holme können als wärmegedämmte, erfindungsgemäße Verbundprofile 4 ausgebildet sein.

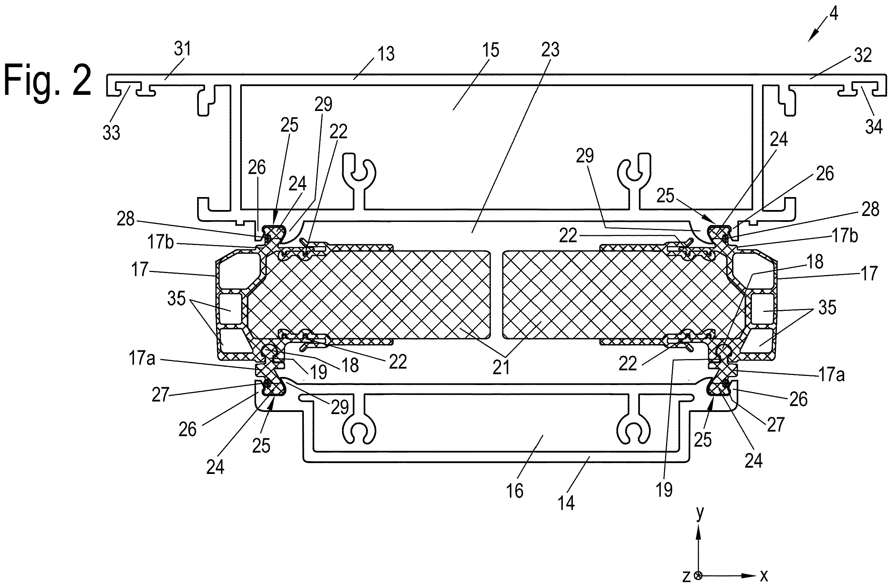

In Fig. 2 ist ein erfindungsgemäßes Verbundprofil 4 dargestellt. Dieses Verbundprofil 4 kann als Flügelrahmenprofil als Teil eines Flügelrahmens 2 oder als Blendrahmenprofil als Teil eines Blendrahmens 3 für Türen 1, Fenster oder anderen Bauelemente eingesetzt werden, so dass sich die nachfolgende Beschreibung gleichermaßen auf Flügelrahmenprofile und Blendrahmenprofile bezieht.

Im Folgenden wird -rein beispielhaft- ein Verbundprofil 4 mit zwei metallischen Außenprofilen 13, 14 beschrieben. Alternativ kann das Verbundprofil 4 auch mit einem metallischen Mittelprofil aufgebaut sein, so dass in dem Fall die zwei metallischen Außenprofile 13, 14 jeweils mit dem metallischen Mittelprofil über jeweils eine Isolierstegebene miteinander verbunden sind. Alternativ kann eines der Außenprofile bzw. das Mittelprofil auch aus Kunststoff hergestellt sein. In einer weiteren alternativen Ausführungsvariante kann das Außenprofil und / oder das Mittelprofil aus Kunststoff auch der statisch tragende Profilbestandteil des Verbundprofils 4 sein.

Das Verbundprofil 4 weist hier ein erstes Metallprofil13 auf, in welchem hier wenigstens eine Hohlkammer 15 ausgebildet ist, sowie ein zweites Metallprofil 14, in dem ebenfalls vorzugsweise wenigstens eine Hohlkammer 16 ausgebildet ist. Die metallischen Profile 13, 14 können alternativ auch ohne ausgeprägte Hohlkammern 15, 16 ausgeführt sein oder mehrere Hohlkammern aufweisen.

Das erste metallische Profil 13 ist mit dem zweiten metallischen Profil 14 über wenigstens einen oder mehrere erste Isolierstege (hier parallel ausgerichtet) 17 verbunden. Diese Isolierstege 17 zwischen dem ersten metallischen Profil 13 und dem zweiten metallischen Profil 14 bilden eine Isolierstegzone bzw. -ebene.

Die Isolierstege 17 weisen hier -rein beispielhaft- mehrere Hohlkammern 35 auf. Alternativ können die Isolierstege 17 aber auch keine Hohlkammern 35 aufweisen oder die Isolierstege 17 können durch Querstege zu einer Art übergeordnetem Isolierprofil zusammengefasst sein.

Die Isolierstege 17 liegen hier -rein beispielhaft- in einer Ebene. Alternativ ist es auch möglich, dass die Isolierstege 17 jeweils vertikal und oder horizontal zueinander versetzt angeordnet sind. Ebenso ist eine diagonale Ausrichtung der Isolierstege 17 möglich.

Das erste und zweite metallische Außenprofil 13 und 14 sind vorzugsweise als stranggepresste Aluminiumprofile hergestellt. Alternativ ist die Herstellung auch aus einem anderen Werkstoff wie Stahl und/oder einem anderen Fertigungsverfahren möglich. Die Isolierstege 17 sind aus einem Kunststoffwerkstoff, wie z.B. Polyamide (PA66, PA6, PPA), Polyester (PET, PBT), Polyolefine (PP) oder auch Polyvinylchlorid (PVC) hergestellt, so dass jeweils eine weitgehende thermische Trennung zwischen den Metallprofilen 13, 14 erreicht wird.

Der Isoliersteg 17 weist einen ersten Isolierstegabschnitt 17a und einen zweiten Isolierstegabschnitt 17b auf, die in y- und x-Richtung (bezogen auf das Koordinatensystem in Fig. 2) formschlüssig durch eine Kederverbindung miteinander verbunden sind.

Der erste, hier kürzere Isolierstegabschnitt 17a weist hier einen Kederwulst 18 sowie eine Kederfahne 19 auf. Der zweite, hier längere Isolierstegabschnitt 17b weist dagegen eine Nut 20 mit korrespondierender Querschnittsgeometrie auf, so dass der Kederwulst 18 in die Nut 20 eingreift und die Kederfahne 19 aus der Nut 20 herausgeführt ist. Alternativ kann der erste, hier kürzere Isolierstegabschnitt 17a die Nut 20 aufweisen und der zweite, hier längere Isolierstegabschnitt 17b kann den Kederwulst 18 und die Kederfahne 19 aufweisen. Derart wird eine erste Gleitführung gebildet. Die Schubfestigkeit in der ersten Gleitführung orthogonal zur Querschnittsebene des Verbundprofils kann, muss aber nicht gegen Null gehen.

Der hier längere Isolierstegabschnitt 17b weist jeweils eine Wärmedämmleiste 21 auf, die formschlüssig durch Schnappverbindungen 22 am längeren Isolierstegabschnitt 17b befestigt ist. Die Wärmedämmleiste 21 ist jeweils als Kragträger ausgebildet, so dass die Wärmedämmleiste 21 jeweils einseitig an jeweils dem hier längeren Isolierstegabschnitt 17b befestigt ist und ohne weitere Abstützung in eine Hohlkammer 23 hineinragt, die durch die Verbindung der beiden Metallprofile 13, 14 durch die Isolierstege 17 zwischen den beiden Metallprofilen 13, 14 gebildet wird.

Vorzugsweise sind die Isolierstege 17 im Querschnitt stegförmig ausgebildet. Die Isolierstegabschnitte 17a, 17 b weisen auf ihrer der ersten Gleitführung abgewandten Seite jeweils verdickte Endabschnitte 24 auf. Vorzugsweise greift dabei jeder der Endabschnitte 24 in eine korrespondierende Nut 25 ein, die von jeweils einem der Metallprofile 13, 14 gebildet wird. Der jeweilige Endabschnitt 24 weist vorzugsweise einen trapezförmigen oder dreieck- bzw. keilförmigen oder L-förmigen oder rechteckigen Querschnitt auf. Die jeweilige Nut 25 weist dementsprechend einen Querschnitt mit jeweils korrespondierendem Querschnitt auf.

Alternativ ist es auch möglich, dass die Kederverbindung zwischen einem dann einteiligen Isoliersteg 17 und einem der Metallprofile 13, 14 gebildet ist (hier nicht dargestellt). In dem Fall weist der Isoliersteg 17 den Kederwulst 18 sowie die Kederfahne 19 auf und das jeweilige Metallprofil 13, 14 die Nut 20 auf. In dem Fall weist der Isoliersteg 17 auf seiner der ersten Gleitführung abgewandten Seite einen verdickten Endabschnitt 24 auf. Vorzugsweise greift dabei der Endabschnitte 24 in eine korrespondierende Nut 25 ein, die von jeweils einem der Metallprofile 13, 14 gebildet wird. Der jeweilige Endabschnitt 24 weist vorzugsweise einen trapezförmigen oder dreieck- bzw. keilförmigen oder L-förmigen oder rechteckigen Querschnitt auf. Die jeweilige Nut 25 weist dementsprechend einen Querschnitt mit jeweils korrespondierendem Querschnitt auf.

Um eine schubfeste und damit zusätzlich kraftschlüssige Verbindung zwischen dem jeweiligen Endabschnitt 24 und der jeweiligen Nut 25 zu erhalten, ist es vorteilhaft, wenn die jeweiligen Endabschnitte 24 in die jeweilige Nut 25 durch ein Umformverfahren festgelegt ist. Dazu weist das jeweilige Metallprofil 13, 14 jeweils einen Steg 26 auf, der hier eine hammerförmige Querschnittsgeometrie aufweist. Durch das Umformverfahren wird der jeweilige Steg 26 zur Anlage auf jeweils einen Draht 27, 28 gebracht und im Zusammenspiel mit einer Wulst 29, den das jeweilige Metallprofil 13, 14 ausbildet, die Nut 25 gebildet und der jeweilige Endabschnitt 24 des jeweiligen Isolierstegs 17 bzw. Isolierstegabschnitt 17a, 17b in x- und y-Richtung in Bezug auf das Koordinatensystem festgelegt.

Der Draht 27, der in Fig. 2 in den hier -rein beispielhaft- kürzeren Isolierstegabschnitt 17a eingesetzt ist, weist hier -ebenfalls rein beispielhaft- an seiner gesamten, also über seinen gesamten Umfang und seiner Länge bezogenen Oberfläche eine Außenstruktur, wie z.B. eine Rändelung auf, was den Reibbeiwert zwischen der Drahtoberfläche und der Oberfläche des Isolierstegabschnitts 17a und damit die Schubfestigkeit in Profilrichtung (z-Richtung nach dem Koordinatensystem in Fig. 2) erhöht. Der hier kürzere Isolierstegabschnitt 17a ist also mit seinem Endabschnitt 24 form- und kraftschlüssig mit der Nut 25 verbunden, so dass sich eine insbesondere auch in z-Richtung (vgl. Koordinatensystem in Fig. 2) bzw. in einer Richtung orthogonal zur Querschnittsebene des Verbundprofils 4 schubfeste Verbindung zwischen dem hier kürzeren Isolierstegabschnitt 17a und den ihm benachbarten Metallprofil14 ergibt.

Der Draht 28, der in den zweiten, hier längeren Isolierstegabschnitt 17b eingesetzt ist, weist hier -rein beispielhaft- an seiner Oberfläche, bezogen auf seinen Umfang und seiner Länge, ebenfalls eine Außenstruktur auf, wie z.B. eine Rändelung auf. Eine Ausnahme bildet ein Oberflächenabschnitt 30, auf den der Steg 26 mit hammerförmiger Geometrie durch den Umformprozess aufliegt.

Bei einer alternativen Ausführung, bei der die erste Gleitführung zwischen dem Isoliersteg 17 und einem Metallprofil 13, 14 gebildet wird, wird der Draht 28 mit dem Oberflächenabschnitt 30 in den Isoliersteg 17 auf seiner dem Kederwulst 18 bzw. der Kederfahne 19 abgewandten Seite eingesetzt.

Dieser Oberflächenabschnitt 30 ist -im Gegensatz zu einer Restoberfläche des Drahtes 28- glatt. Glatt bedeutet hier, dass der Oberflächenabschnitt 30 keine durch ein dafür geeignetes Fertigungsverfahren resultierende, bewusst aufgebrachte Unebenheit der Oberflächenhöhe -wie z.B. eine Rändelung- aufweist.

Der Oberflächenabschnitt 30 ist derart ausgebildet, das er sich vorzugsweise auf der gesamten Länge des Drahtes 28 erstreckt, sich allerdings nur über einen Teil des Umfangs des Drahtes 28 erstreckt. Der Oberflächenabschnitt 30 bildet in Bezug auf den Durchmesser des Drahtes 28 vorzugsweise und vorteilhaft eine Kreissehne, die vorzugsweise mit einem Mittelpunktwinkel zwischen 10° und 130°, besonders bevorzugt einen Mittelpunktwinkel zwischen 35° und 120° aufweist.

Der Oberflächenabschnitt 30 des Drahtes 28 ist z.B. durch eine Bearbeitung eines Drahtes 27, der eine Außenstruktur -wie z.B. einer Rändelung- aufweist, hergestellt, wobei durch die Bearbeitung die Kreissehne gebildet wird. Der Betrag des Mittelpunktwinkels der Kreissehne ergibt sich durch ein entsprechend gewähltes Zustellmaß des Bearbeitungswerkzeuges. Vorzugsweise ist die Bearbeitung eine Schleifbearbeitung.

Alternativ kann auch ein Drahthalbzeug mit einem D-förmigen Querschnitt eingesetzt werden, dessen kreisbogenförmiger Umfangsabschnitt durch eine entsprechende Bearbeitung mit einer Außenstruktur -wie z.B. einer Rändelung- versehen ist. In einer weiteren alternativen Ausführungsform kann auch ein Drahthalbzeug mit einer Querschnittsgeometrie in Form einer liegenden Acht eingesetzt bzw. ein kreisrundes Drahthalbzeug mit einer Einkerbung am Umfang an Stelle der glatten Oberfläche 30 eingesetzt werden, deren jeweils kreisbogenförmiger Umfangsabschnitt durch eine entsprechende Bearbeitung mit einer Außenstruktur -wie z.B. einer Rändelung- versehen ist.

Vorteilhaft kann zusätzlich auch der hier kürzere Isolierstegabschnitt 17a mit einem solchen Draht 28 eingesetzt werden. Besonders vorteilhaft ist, wenn wenigstens einer der Drähte 27, 28 ein Draht ist 28 ist, der einen glatten Oberflächenabschnitt 30 aufweist, auf den der jeweilige Steg 26 zur Auflage kommt, um den jeweiligen Endabschnitt 24 wenigstens eines Isolierstegabschnitts 17a, 17b bzw. des Isolierstegs 17 gleitbeweglich festzulegen. Derart wird eine zweite Gleitführung gebildet. Die zweite Gleitführung ist gemäß dem Prinzip der Trockenreibung oder Festkörperreibung bzw. Coulombschen Reibung so ausgelegt, dass zunächst eine definierte Haftreibung überwunden werden muss, damit die Reibpartner relativ zueinander ins Gleiten kommen. Dabei kann dieser Vorgang auch im Sinne eines Ruckgleitens ("Stick-Slip") auch mehrmals während eines Gleitvorgangs durchlaufen werden.

Hierdurch ergibt sich ein Verbundprofil 4, das temperaturbedingte Verformungen, insbesondere auch solche, die auf Fertigungseinflüsse des Verbundprofils beruhen, durch eine schubweiche oder schublose Verbindung von einem der Metallprofile 13, 14 und den jeweiligen Isolierstegen 17 ausgleichen kann.

Die erste Metallprofil 13 weist an jeweils gegenüberliegenden Seiten nach außen hervorstehende Stege 31 und 32 auf, wobei endseitig an dem Steg 31 eine Nut 33 zur Aufnahme einer Dichtung und an dem Steg 32 eine weitere Nut 34 zur Aufnahme einer Dichtung vorgesehen ist.

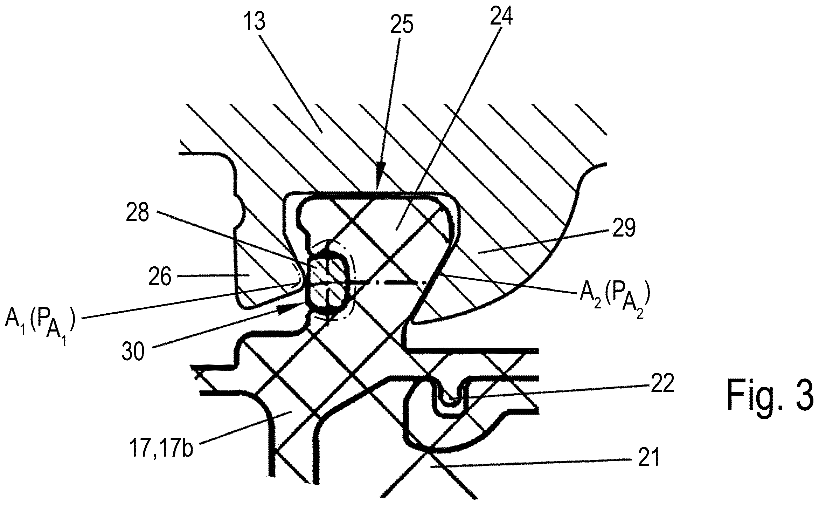

In Fig. 3 ist eine Ausschnittsvergrößerung des Isolierstegabschnitts 17a dargestellt. Gut erkennbar ist der Steg 26 mit hammerförmiger Querschnittsgeometrie, der nach erfolgtem Umformprozess auf dem glatten Oberflächenabschnitt 30 des Drahtes 28 zur Auflage gekommen ist und mit dem Isolierstegabschnitt 17a hier die zweite Gleitführung bildet.

Darüber hinaus sind die geometrischen Verhältnisse zwischen einer Auflagefläche A₁ des Stegs 26 mit hammerförmiger Querschnittsgeometrie auf dem glatten Oberflächenabschnitt 30 des Drahtes 28 und einer Auflagefläche A₂ der Restoberfläche des Drahtes 28 auf ein angrenzendes Bauteil -hier dem Isolierstegabschnitt 17a- gut erkennbar dargestellt.

Es hat sich herausgestellt, dass ein Verhältnis der Beträge der Flächenpressung p auf den Auflageflächen A₁ bzw. A₂ von p_{A1} ≥ p_{A2} besonders vorteilhaft ist. Insofern wird hier eine zweite Gleitführung insbesondere zum Abbau von Spannungen bzw. unerwünschten Verformungen, die aus Fertigungseinflüssen und aus Witterungseinflüssen resultieren, geschaffen. Bei dieser zweiten Gleitführung wirken -abweichend zu der weiter oben beschriebenen ersten Gleitführung mit der Kederverbindungdementsprechend drei unterschiedliche Funktionsträger, -hier der Steg 26 mit hammerförmiger Querschnittsgeometrie, der Draht 28 mit glattem Oberflächenabschnitt 30 sowie dem Isolierstegabschnitt 17a- zusammen. Die Funktionsträger 26, 28, 17a der zweiten Gleitführung können jeweils aus unterschiedlichen Werkstoffen hergestellt sein, wobei mindestens einer der Funktionsträger 26, 28, 17a aus einem Kunststoffwerkstoff hergestellt ist und mindestens ein anderer Funktionsträger 26, 28, 17a aus einem metallischen Werkstoff hergestellt ist.

Die Gleiteigenschaften der jeweiligen Reibpartner der zweiten Gleitführung -hier für die Auflagefläche A₁ der Steg 26 mit hammerförmiger Querschnittsgeometrie auf dem glatten Oberflächenabschnitt 30 des Drahtes 28 und für die Auflagefläche A₂ die Restoberfläche des Drahtes 28 auf dem Isolierstegabschnitt 17a- können durch eine entsprechende Wahl der Reibbeiwerte µ und / oder der Anpresskraft des Stegs 26 mit hammerförmiger Querschnittsgeometrie auf dem glatten Oberflächenabschnitt 30 des Drahtes 28 eingestellt werden.

### Bezugszeichenliste

- 1: Tür
- 2: Flügelrahmen
- 3: Blendrahmen
- 4: Verbundprofil
- 5: Flügelrahmenholm
- 6: Flügelrahmenholm
- 7: Flügelrahmenholm
- 8: Seitenteil
- 9: Seitenteil
- 10: Blendrahmenholm
- 11: Blendrahmenholm
- 12: Blendrahmenholm
- 13: Metallprofil
- 14: Metallprofil
- 15: Hohlkammer
- 16: Hohlkammer
- 17: Isoliersteg
- 17a, 17b: Isolierstegabschnitte
- 18: Kederwulst
- 19: Kederfahne
- 20: Nut
- 21: Wärmedämmleiste
- 22: Schnappverbindung
- 23: Hohlkammer
- 24: Endabschnitt
- 25: Nut
- 26: Steg
- 27: Draht
- 28: Draht
- 29: Wulst
- 30: Oberflächenabschnitt
- 31: Steg
- 32: Steg
- 33: Nut
- 34: Nut
- 35: Hohlkammer

## Patentansprüche

1. Verbundprofil (4) für Türen (1), Fenster oder Fassadenelemente mit
a. einem ersten Metallprofil (13) und wenigstens einem Isoliersteg (17),
b. wobei das erste Metallprofil (13) in wenigstens einer Isolierstegzone mit dem einen oder den mehreren Isoliersteg(en) (17) verbunden ist / sind, und
c. der oder die Isoliersteg(e) (17) jeweils wenigstens einen Endabschnitt (24) aufweist bzw. aufweisen,
d. wobei wenigstens einer der Endabschnitte (24) jedes Isolierstegs (17) in eine korrespondierende Nut (25) eingreift, die von dem ersten Metallprofile (13) gebildet ist, wobei die Nut (25) aus einem Wulst (29) und einem Steg (26) gebildet ist,
e. wobei der Steg (26) auf dem Umfang eines Drahtes (28) aufliegt, der in den jeweiligen Isoliersteg (17) eingesetzt ist,
wobei
f. der Draht (28) einen glatten Oberflächenabschnitt (30) aufweist, auf dem der jeweilige Steg (26) zur Auflage kommt, um den jeweiligen Endabschnitt (24) des Isolierstegs (17) gleitbeweglich festzulegen,
g. wobei der Steg (26) auf dem glatten Oberflächenabschnitt (30) des Drahtes (28) eine erste Auflagefläche (A₁) bildet und eine Restoberfläche des Drahtes (28) auf dem Isoliersteg (17) eine zweite Auflagefläche (A₂) bildet
h. und die sich durch Montage des ersten Metallprofils (13) mit dem Isoliersteg (17) und dem Draht (28) bildenden Flächenpressungen p der Auflageflächen A₁ und A₂ im Verhältnis p_{A1} ≥ p_{A2} stehen, **dadurch gekennzeichnet, dass**
i. der glatte Oberflächenabschnitt (30) derart ausgebildet ist, dass er sich vorzugsweise auf der gesamten Länge des Drahtes (28) erstreckt, sich allerdings nur über einen Teil des Umfangs des Drahtes (28) erstreckt.

2. Verbundprofil (4) nach Anspruch 1, **gekennzeichnet durch**
a. das erste Metallprofil (13) und wenigstens ein zweites Metallprofil (14)
b. wobei das erste Metallprofil (13) mit dem zweiten Metallprofil (14) in wenigstens einer Isolierstegzone über einen oder mehrere der Isoliersteg(e) (17) verbunden ist / sind.

3. Verbundprofil (4) nach Anspruch 1 oder 2, **dadurch gekennzeichnet,** das der Draht (28) den glatten Oberflächenabschnitt (30) aufweist, auf dem der jeweilige Steg (26) zur Auflage kommt, um den jeweiligen Endabschnitt (24) des Isolierstegs (17) festzulegen.

4. Verbundprofil (4) nach einem der vorgenannten Ansprüche, **dadurch gekennzeichnet, dass** der glatte Oberflächenabschnitt (30) des Drahtes (28) durch eine Bearbeitung eines Drahtes (27), der über seinem gesamten Umfang eine strukturierte Oberfläche aufweist, hergestellt ist, wobei durch eine Bearbeitung die Kreissehne gebildet wird und sich der Betrag des Mittelpunktwinkels der Kreissehne durch ein entsprechend gewähltes Zustellmaß eines Bearbeitungswerkzeuges ergibt.

5. Verbundprofil (4) nach Anspruch 4, **dadurch gekennzeichnet, dass** die Bearbeitung eine Schleifbearbeitung ist.

6. Verbundprofil (4) nach einem der Ansprüche 1 bis 5, **dadurch gekennzeichnet, dass** der glatte Oberflächenabschnitt (30) des Drahtes (28) durch den Einsatz eines Drahthalbzeugs mit einem D-förmigen Querschnitt hergestellt ist, dessen kreisbogenförmiger Umfangsabschnitt durch eine Bearbeitung mit einer Außenstruktur versehen ist.

7. Verbundprofil (4) nach Anspruch 1 bis 5, **dadurch gekennzeichnet, dass** der glatte Oberflächenabschnitt (30) des Drahtes (28) durch den Einsatz eines Drahthalbzeugs mit einer Querschnittsgeometrie in Form einer liegenden Acht hergestellt ist, dessen kreisbogenförmiger Umfangsabschnitt durch eine entsprechende Bearbeitung mit einer Außenstruktur versehen ist.

8. Verbundprofil (4) nach einem der vorgenannten Ansprüche, **dadurch gekennzeichnet, dass** die Isolierstegabschnitte (17a, 17b) eine unterschiedliche Länge aufweisen.

9. Verbundprofil (4) nach einem der vorgenannten Ansprüche, **dadurch gekennzeichnet, dass** der erste Isolierstegabschnitt (17a) mit dem zweiten Isolierstegabschnitt (17b) über den Kederwulst (18), die Kederfahne (19) und die Nut (20) beweglich miteinander zu dem übergeordneten Isoliersteg (17) verbunden sind.

10. Verbundprofil (4) nach einem der vorstehenden Ansprüche, **dadurch gekennzeichnet, dass** der Isoliersteg (17) den Kederwulst (18) sowie die Kederfahne (19) aufweist und das jeweilige Metallprofil (13, 14) eine korrespondierend geformte Nut (20) aufweist.

11. Verbundprofil (4) nach einem der vorstehenden Ansprüche, **dadurch gekennzeichnet, dass** der erste Isoliersteg (17) mit einem der Metallprofile (13, 14) über den Kederwulst (18), die Kederfahne (19) und die Nut (20) beweglich miteinander verbunden sind.

12. Verbundprofil (4) nach Anspruch 11 oder 12, **dadurch gekennzeichnet, dass** der erste Isoliersteg (17) auf seiner der ersten Gleitführung abgewandten Seite einen verdickten Endabschnitt (24) aufweist.

13. Verbundprofil (4) nach einem der vorgenannten Ansprüche, **dadurch gekennzeichnet, dass** der Isoliersteg (17) bzw. der erste Isolierstegabschnitt (17a) und der zweite Isolierstegabschnitt (17b) aus einem Kunststoffwerkstoff hergestellt ist /sind.

14. Verfahren zur Herstellung eines Verbundprofils (4) für Türen (1), Fenster oder Fassadenelemente nach einem oder mehreren der vorgenannten Ansprüche,
a. bei dem ein Verbinden eines ersten Metallprofils (13) mit wenigsten einem Isolierstegs (17) in wenigstens einer Isolierstegzone erfolgt, wobei der oder die Isoliersteg(e) (17) jeweils wenigstens einen Endabschnitt (24) aufweist bzw. aufweisen,
b. derart, dass wenigstens einer der Endabschnitte (24) jedes Isolierstegs (17) in eine korrespondierende Nut (25) eingreift, die von dem ersten Metallprofile (13) gebildet ist,
c. wobei die Nut (25) aus einem Wulst (29) und einem Steg (26) gebildet ist,
**gekennzeichnet durch**
d. ein Auflegen des Steges (26) auf den Umfang eines Drahtes (28), der in den jeweiligen Isoliersteg (17) eingesetzt ist,
e. wobei der Draht (28) einen glatten Oberflächenabschnitt (30) aufweist, auf dem der jeweilige Steg (26) zur Auflage kommt, um den jeweiligen Endabschnitt (24) des Isolierstegs (17) gleitbeweglich festzulegen,
f. derart, dass der Steg (26) auf dem glatten Oberflächenabschnitt (30) des Drahtes (28) eine erste Auflagefläche (A₁) bildet
g. und eine Restoberfläche des Drahtes (28) auf dem Isoliersteg (17) eine zweite Auflagefläche (A₂) bildet
h. und derart, dass die sich durch Montage des ersten Metallprofils (13) mit dem Isoliersteg (17) und dem Draht (28) bildenden Flächenpressungen p der Auflageflächen A₁ und A₂ im Verhältnis p_{A1} ≥ p_{A2} stehen.

15. Fenster, Tür (1) oder Fassadenelement, dessen Blendrahmen (2) und / oder Flügelrahmen (3) aus Blendrahmenholmen (10, 11, 12) bzw. Flügelrahmenholmen (5, 6, 7) zusammengesetzt sind, die jeweils aus einem Verbundprofil (4) nach einem der vorgenannten Ansprüche hergestellt sind.

## Claims

1. A composite profile (4) for doors (1), windows or façade elements, comprising:
a) a first metal profile (13) and at least one insulating web (17),
b) wherein the first metal profile (13) is connected to the one or more insulating webs (17) in at least one insulating web zone, and
c) the insulating web or webs (17) each have at least one end portion (24),
d) wherein at least one of the end portions (24) of each insulating web (17) engages in a corresponding groove (25) formed by the first metal profile (13), wherein the groove (25) is formed by a bead (29) and a web (26),
e) wherein the web (26) rests on the circumference of a wire (28) which is inserted into the respective insulating web (17),
wherein
f) the wire (28) has a smooth surface portion (30) on which the respective web (26) abuts to slidably define the respective end portion (24) of the insulating web (17),
g) wherein the web (26) forms on the smooth surface portion (30) of the wire (28) a first bearing surface (A₁) and a remaining surface of the wire (28) on the insulating web (17) forms a second bearing surface (A₂),
h) and the surface pressures p of the bearing surfaces A₁ and A₂ formed by mounting the first metal profile (13) with the insulating web (17) and the wire (28) are in the ratio p_{A1} ≥ P_{A2},
**characterized in that**
i) the smooth surface portion (30) is formed to extend preferably along the entire length of the wire (28), but only over part of the circumference of the wire (28).

2. A composite profile (4) according to claim 1, **characterized by**
a) the first metal profile (13) and at least one second metal profile (14),
b) wherein the first metal profile (13) is connected to the second metal profile (14) in at least one insulating web zone via one or more of the insulating webs (17).

3. A composite profile (4) according to claim 1 or 2, **characterized in that** the wire (28) has the smooth surface portion (30) on which the respective web (26) abuts in order to determine to the respective end portion (24) of the insulating web (17).

4. A composite profile (4) according to one of the preceding claims, **characterized in that** the smooth surface portion (30) of the wire (28) is made by machining a wire (27) having a structured surface over its entire circumference, wherein the chord is formed by a machining and the amount of the center angle of the chord is obtained by an appropriately selected feed amount of a machining tool.

5. A composite profile (4) according to claim 4, **characterized in that** the machining is a grinding operation.

6. A composite profile (4) according to one of the claims 1 to 5, **characterized in that** the smooth surface portion (30) of the wire (28) is produced by the use of a semi-finished wire product with a D-shaped cross-section, the circular arc-shaped peripheral portion of which is provided with an outer structure by machining.

7. A composite profile (4) according to claim 1 to 5, **characterized in that** the smooth surface portion (30) of the wire (28) is produced by the use of a semi-finished wire product with a cross-sectional geometry in the shape of a horizontal eight, the circular arc-shaped peripheral portion of which is provided with an outer structure by corresponding machining.

8. A composite profile (4) according to one of the preceding claims, **characterized in that** the insulating web portions (17a, 17b) have a different length.

9. A composite profile (4) according to one of the preceding claims, **characterized in that** the first insulating web portion (17a) and the second insulating web portion (17b) are mutually movably connected to each other via the welt bead (18), the welt flag (19) and the groove (20) to form the superior insulating web (17).

10. A composite profile (4) according to one of the preceding claims, **characterized in that** the insulating web (17) has the welt bead (18) and the welt flag (19) and the respective metal profile (13, 14) has a correspondingly shaped groove (20).

11. A composite profile (4) according to one of the preceding claims, **characterized in that** the first insulating web (17) is movably connected to one of the metal profiles (13,14) via on the welt bead (18), the welt flag (19) and the groove (20).

12. A composite profile (4) according to claim 11 or 12, **characterized in that** the first insulating web (17) has a thickened end portion (24) on its side facing away from the first sliding guide.

13. A composite profile (4) according to one of the preceding claims, **characterized in that** the insulating web (17) or the first insulating web portion (17a) and the second insulating web portion (17b) is/are made of a plastic material.

14. A method for producing a composite profile (4) for doors (1), windows or façade elements according to one or more of the preceding claims,
a) in which a joining of a first metal profile (13) with at least one insulating web (17) takes place in at least one insulating web zone, wherein the insulating web or webs (17) each have at least one end portion (24),
b) such that at least one of the end portions (24) of each insulating web (17) engages in a corresponding groove (25) formed by the first metal profile (13),
c) wherein the groove (25) is formed by a bead (29) and a web (26),
**characterized by**
d) placing the web (26) on the circumference of a wire (28) which is inserted into the respective insulating web (17),
e) wherein the wire (28) has a smooth surface portion (30) on which the respective web (26) comes to lie to slidably define the respective end portion (24) of the insulating web (17),
f) such that the web (26) forms a first bearing surface (A₁) on the smooth surface portion (30) of the wire (28),
g) and a remainder surface of the wire (28) on the insulating web (17) forms a second bearing surface (A₂)
h) and such that surface pressures p of the bearing surfaces A₁ and A₂ formed by mounting the first metal profile (13) with the insulating web (17) and the wire (28) are in the ratio p_{A1} ≥ p_{A2}.

15. A window, door (1) or façade element whose blind frame (2) and/or leaf frame (3) are composed of blind frame spars (10, 11, 12) or leaf frame spars (5, 6, 7), each made of a composite profile (4) according to one of the preceding claims.

## Revendications

1. Profilé composite (4) pour portes (1), fenêtres ou éléments de façade avec :
a. un premier profilé métallique (13) et au moins une aile d'isolation (17),
b. le premier profilé métallique (13) étant assemblé avec la ou les ailes d'isolation (17) dans au moins une zone d'aile d'isolation et
c. la ou les ailes d'isolation (17) présentant chacune au moins une partie d'extrémité (24),
d. au moins une des parties d'extrémité (24) de chaque aile d'isolation (17) se mettant en prise dans une rainure (25) correspondante formée par le premier profilé métallique (13), la rainure (25) étant formée par un bourrelet (29) et une aile (26), e. l'aile (26) reposant sur la circonférence d'un fil métallique (28) qui est inséré dans l'aile d'isolation (17) correspondante,
dans lequel
f. le fil métallique (28) présente une partie de surface lisse (30) sur laquelle l'aile (26) correspondante vient reposer pour fixer la partie d'extrémité (24) de l'aile d'isolation (17) correspondante de façon mobile en glissement,
g. l'aile (26) formant sur la partie de surface lisse (30) du fil métallique (28) une première surface d'appui (A₁) et une surface restante du fil métallique (28) formant sur l'aile d'isolation (17) une deuxième surface d'appui (A₂)
h. et les pressions de surface p exercées lors du montage du premier profilé métallique (13) avec l'aile d'isolation (17) et le fil métallique (28) au niveau des surfaces d'appui A₁ et A₂ présentant un rapport p_{A1} ≥ p_{A2},
**caractérisé en ce que**
i. la partie de surface lisse (30) est conformée de façon à s'étendre de préférence sur toute la longueur du fil métallique (28) mais sur une partie seulement de la circonférence du fil métallique (28).

2. Profilé composite (4) selon la revendication 1, **caractérisé en ce qu'**il comporte
a. le premier profilé métallique (13) et au moins un deuxième profilé métallique (14),
b. le premier profilé métallique (13) étant assemblé au deuxième profilé métallique (14) dans au moins une zone d'aile d'isolation par l'intermédiaire d'une ou plusieurs des ailes d'isolation (17).

3. Profilé composite (4) selon la revendication 1 ou 2, **caractérisé en ce que** le fil métallique (28) présente la partie de surface lisse (30) sur laquelle l'aile (26) correspondante vient reposer pour fixer la partie d'extrémité (24) correspondante de l'aile d'isolation (17).

4. Profilé composite (4) selon l'une des revendications précédentes, **caractérisé en ce que** la partie de surface lisse (30) du fil métallique (28) est formée par un usinage d'un fil métallique (27) qui présente une surface structurée sur toute sa circonférence, un usinage formant la corde de cercle et la valeur de l'angle au centre de la corde de cercle étant obtenue par le choix approprié d'une grandeur d'approche de l'outil d'usinage.

5. Profilé composite (4) selon la revendication 4, **caractérisé en ce que** l'usinage est un usinage à la meule.

6. Profilé composite (4) selon l'une des revendications 1 à 5, **caractérisé en ce que** la partie de surface lisse (30) du fil métallique (28) est formée par utilisation d'un semi-produit de fil métallique à section en forme de D dont la partie de circonférence en arc de cercle est dotée d'une structure extérieure par un usinage.

7. Profilé composite (4) selon la revendication 1 à 5, **caractérisé en ce que** la partie de surface lisse (30) du fil métallique (28) est formée par utilisation d'un semi-produit de fil métallique dont la géométrie en section a la forme d'un huit couché, dont la partie de circonférence en arc de cercle est dotée d'une structure extérieure par un usinage.

8. Profilé composite (4) selon l'une des revendications précédentes, **caractérisé en ce que** les parties d'aile d'isolation (17a, 17b) présentent une longueur différente.

9. Profilé composite (4) selon l'une des revendications précédentes, **caractérisé en ce que** la première partie d'aile d'isolation (17a) est assemblée à la deuxième partie d'aile d'isolation (17b) de manière mobile par l'intermédiaire du bourrelet de jonc (18), de la lèvre de jonc (19) et de la gorge (20) pour former l'ensemble d'aile d'isolation (17).

10. Profilé composite (4) selon l'une des revendications précédentes, **caractérisé en ce que** l'aile d'isolation (17) présente le bourrelet de jonc (18) et la lèvre de jonc (19) et le profilé métallique (13, 14) correspondant présente une rainure (20) de forme correspondante.

11. Profilé composite (4) selon l'une des revendications précédentes, **caractérisé en ce que** la première aile d'isolation (17) est assemblée à l'un des profilés métalliques (13, 14) de façon mobile par l'intermédiaire du bourrelet de jonc (18), de la lèvre de jonc (19) et de la rainure (20).

12. Profilé composite (4) selon la revendication 11 ou 12, **caractérisé en ce que** la première aile d'isolation (17) présente une partie d'extrémité épaissie (24) sur son côté tourné à l'opposé du premier guide de glissement.

13. Profilé composite (4) selon l'une des revendications précédentes, **caractérisé en ce que** l'aile d'isolation (17) ou la première partie d'aile d'isolation (17a) et la deuxième partie d'aile d'isolation (17b) sont fabriquées à partir d'un matériau synthétique.

14. Procédé pour la fabrication d'un profilé composite (4) pour portes (1), fenêtres ou éléments de façade selon une ou plusieurs des revendications précédentes,
a. dans lequel un premier profilé métallique (13) est assemblé à au moins une aile d'isolation (17) dans au moins une zone d'aile d'isolation, la ou les ailes d'isolation (17) présentant chacune une partie d'extrémité (24),
b. de telle sorte qu'au moins une des parties d'extrémité (24) de chaque aile d'isolation (17) se mette en prise dans une rainure (25) correspondante formée par le premier profilé métallique (13),
c. dans lequel la rainure (25) est formée d'un bourrelet (29) et d'une aile (26),
**caractérisé en ce que**
d. l'aile (26) est posée sur la circonférence d'un fil métallique (28) qui est inséré dans l'aile d'isolation (17) correspondante,
e. le fil métallique (28) présentant une partie de surface lisse (30) sur laquelle l'aile (26) correspondante vient reposer pour fixer la partie d'extrémité (24) correspondante de l'aile d'isolation (17) de façon mobile en glissement,
f. de telle manière que l'aile (26) forme sur la partie de surface lisse (30) du fil métallique (28) une première surface d'appui (A₁)
g. et qu'une surface restante du fil métallique (28) forme sur l'aile d'isolation (17) une deuxième surface d'appui (A₂)
h. et de telle manière que les pressions de surface p exercées lors du montage du premier profilé métallique (13) avec l'aile d'isolation (17) et le fil métallique (28) au niveau des surfaces d'appui A₁ et A₂ présentent un rapport p_{A1} ≥ p_{A2}.

15. Fenêtre, porte (1) ou élément de façade dont le cadre de dormant (2) et/ou le cadre de battant (3) sont assemblés à partir d'éléments de cadre de dormant (10, 11, 12) ou d'éléments de cadre de battant (5, 6, 7) fabriqués chacun à partir d'un profilé composite (4) selon l'une des revendications précédentes.
